# FASCICULE DE BREVET EUROPEEN

(11) **EP 3 775 581 B1**
(45) Date de publication et mention de la délivrance du brevet: **06.03.2024**
(21) Numéro de dépôt: 19714596.4
(22) Date de dépôt: 26.03.2019
(51) Int. Cl.: F16B 5/06, B60R 13/02, F16B 21/07

(54) **DISPOSITIF DE FIXATION PRÉSENTANT UNE FONCTION DE RÉSISTANCE À L'ARRACHEMENT**
BEFESTIGUNGSVORRICHTUNG MIT AUSZIEHWIDERSTANDSFUNKTION
FASTENING DEVICE HAVING A PULL-OUT RESISTANCE FUNCTION

(30) Priorité: 27.03.2018 FR 1852628
(43) Date de publication de la demande: 17.02.2021
(73) Titulaire: FAURECIA INTERIEUR INDUSTRIE, 92000 Nanterre (FR)
(72) Inventeur: MAGNIEZ, Claude, 60570 Andeville (FR); DUCHET, Dominique, 60730 Cauvigny (FR)
(74) Mandataire: Lavoix
(86) Numéro de dépôt international: PCT/EP2019/057645
(87) Numéro de publication internationale: WO 2019/185664

(56) Documents cités:
- EP-A1- 3 357 759
- EP-B1- 2 279 356
- DE-A1-102014 008 806
- JP-A- 2011 194 897
- US-A1- 2004 052 575

## Description

La présente invention concerne un dispositif de fixation d'une première pièce à une deuxième pièce selon le préambule de la revendication 1.

L'invention concerne également un ensemble d'une première pièce et d'une deuxième pièce fixées par au moins un tel dispositif de fixation.

Un tel dispositif de fixation est par exemple utilisé pour fixer un élément de garnissage à une partie structurelle d'un véhicule, par exemple pour fixer un panneau de porte à la tôle de porte d'un véhicule.

Un tel dispositif de fixation est plus particulièrement adapté pour empêcher une séparation ou un arrachement entre la première pièce et la deuxième pièce en cas de choc contre le véhicule, par exemple au cours du déploiement d'un coussin gonflable. On évite ainsi que l'une des pièces soit projetée dans l'habitacle du véhicule, ce qui pourrait blesser les passagers du véhicule.

L'arrachement est empêché grâce à la coopération entre la tête de la tige de l'élément mâle et l'élément de retenue solidarisé à l'élément femelle. A cet effet, la force de retenue appliquée entre la tête et l'élément de retenue est dimensionnée pour que la coopération entre la tête et l'élément de retenue soit maintenue lorsqu'une force contraire supérieure à un certain seuil est appliquée sur le dispositif de fixation.

Afin de permettre un démontage des pièces entre elles, il est par exemple prévu de permettre de retirer ou de déplacer l'élément de retenue afin de pouvoir retirer la tige du logement de l'élément femelle sans que l'élément de retenue n'interfère avec la tête de la tige. Pour ce faire, la première et la deuxième pièces doivent pouvoir être écartées l'une de l'autre afin qu'un outil ou la main d'un opérateur puisse accéder à l'élément de retenue pour le retirer ou le déplacer. C'est pourquoi, en utilisation normale du dispositif de fixation, une distance est maintenue entre la tête et l'élément de retenue lorsque la tige est introduite dans le logement.

Les documents FR-2 981 135 et FR-3 038 019 décrivent par exemple de tels dispositifs de fixation.

De tels dispositifs de fixation sont donc satisfaisants pour éviter l'arrachement en cas d'impact, mais ils ne permettent pas d'assurer un placage d'une pièce sur l'autre sans jeu entre les pièces, ce qui n'est pas satisfaisant en termes de qualité perçue par les passagers du véhicule.

Pour pallier cet inconvénient, il est prévu des dispositifs de fixation complémentaires permettant un maintien sans jeu entre la première et la deuxième pièces. Ces dispositifs de fixation sont par exemple prévus pour être moins résistants à l'arrachement que le dispositif de fixation décrit ci-dessus de sorte que le démontage des pièces reste possible.

La fixation de la deuxième pièce sur la première pièce nécessite donc une pluralité de dispositifs de fixation et d'opérations de fixation de ces dispositifs de fixation, ce qui complique la structure des pièces et le procédé de montage d'une pièce sur l'autre.

Les documents EP 2 279 356, US 2004/052575, DE 10 2014 008806, JP 2011 194897 et EP 3 357 759 décrivent des dispositifs de fixation, dans lesquels le démontage se fait dans une position de résistance à l'arrachement.

L'invention a pour but de pallier les inconvénients ci-dessus en proposant un dispositif de fixation permettant d'assurer à la fois une fonction de prévention de l'arrachement tout en assurant un maintien sans jeu des pièces entre elles et en permettant un démontage des pièces.

A cet effet, l'invention concerne un dispositif de fixation selon la revendication 1.

Ainsi, le même dispositif de fixation permet d'assurer la fonction anti-arrachement par la coopération entre la tête et l'élément de retenue en cas d'impact et d'assurer une fixation sans jeu par la coopération entre la surface de butée et la surface de butée complémentaire. Le démontage des pièces entre elles reste possible en défaisant la coopération entre la surface de butée et la surface de butée complémentaire, ce qui permet d'écarter les pièces l'une de l'autre pour le passage d'un outil ou de la main d'un opérateur.

Le dispositif de fixation selon l'invention peut comprendre les caractéristiques des revendications 2 à 10, prises isolément ou selon toute combinaison techniquement envisageable.

L'invention concerne également un ensemble d'une première pièce et d'une deuxième pièce selon la revendication 11.

L'ensemble peut comprendre les caractéristiques de la revendication 12.

D'autres aspects et avantages de l'invention apparaîtront à la lecture de la description qui suit, donnée à titre d'exemple et faite en référence aux dessins annexés, dans lesquels :
- la Fig. 1 est une représentation schématique en coupe d'un ensemble d'une première pièce et d'une deuxième pièce fixées l'une à l'autre par un dispositif de fixation dans une configuration de fixation,
- la Fig. 2 est une représentation schématique en coupe de l'ensemble de la Fig. 1, lorsque les première et deuxième pièces ne sont pas fixées l'une à l'autre, et
- la Fig. 3 est une représentation schématique en coupe de l'ensemble de la Fig. 1, les première et deuxième pièces étant fixées l'une à l'autre par un dispositif de fixation dans une configuration de résistance à l'arrachement.

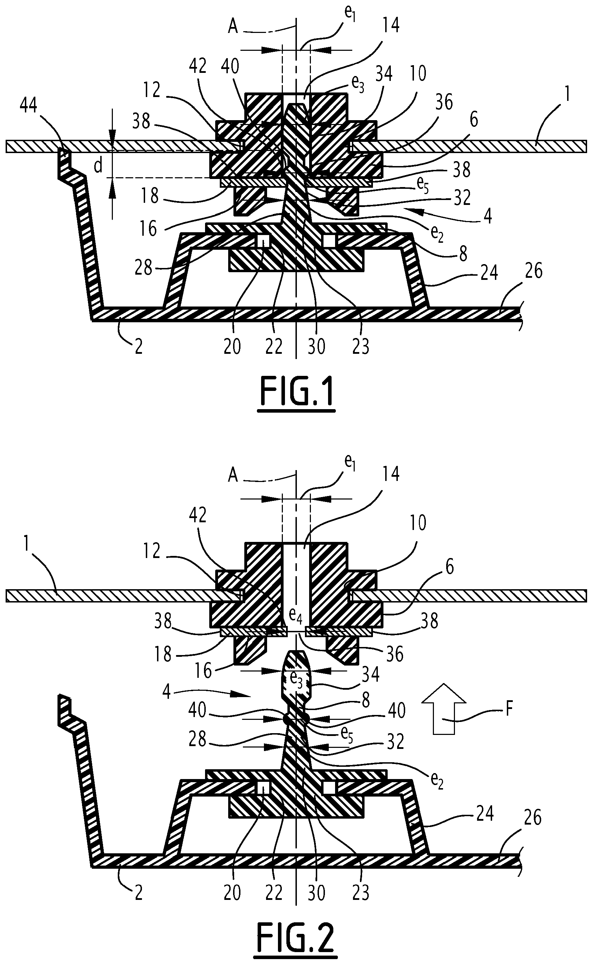

En référence à la Fig. 1, on décrit un ensemble d'une première pièce 1 et d'une deuxième pièce 2 fixées l'une à l'autre par au moins un dispositif de fixation 4, comprenant un élément femelle 6 et un élément mâle 8.

La première pièce 1 est par exemple une tôle de porte de véhicule, plus particulièrement une tôle interne de porte, et la deuxième pièce 2 est par exemple un panneau de porte, formant un garnissage intérieur de la porte de véhicule. Il est cependant entendu que l'invention peut s'appliquer à tout type de pièces de véhicule devant être fixées l'une à l'autre.

L'élément femelle 6 est fixé à la première pièce 1. Plus particulièrement, l'élément femelle 6 est par exemple reçu dans un alésage 10 correspondant de la première pièce 1, le bord de cet alésage 10 étant par exemple introduit dans une gorge annulaire 12 de l'élément femelle 6. L'élément femelle 6 comprend un logement 14 s'étendant selon une direction axiale A. La direction axiale A est par exemple alignée sur l'axe de l'alésage 10. Le logement 14 peut avoir toute forme appropriée. Il est par exemple formé par un orifice traversant l'élément femelle 6 selon la direction axiale. L'orifice peut être fermé ou ouvert du côté externe de la première pièce 1 et il est ouvert du côté interne de la première pièce 1, c'est-à-dire du côté s'étendant en regard de la deuxième pièce 2. Le logement 14 présente une dimension transversale e₁ mesurée selon une direction transversale sensiblement perpendiculaire à la direction axiale A. Dans le cas d'un logement 14 présentant la forme d'un cylindre de révolution, la dimension transversale e₁ correspond au diamètre de la section du logement 14.

L'élément femelle 6 comprend en outre une zone de réception 16 d'un élément de retenue 18, qui sera décrit ultérieurement. La zone de réception 16 est par exemple formée par un alésage s'étendant du côté ouvert du logement 14 dans un plan sensiblement perpendiculaire à la direction axiale A. L'élément femelle 6 est par exemple formé d'une seule pièce en matière plastique rapportée, comme indiqué précédemment, sur la première pièce 1. En variante, l'élément femelle 6 peut être formé d'une seule pièce avec la première pièce 1.

L'élément mâle 8 est fixé sur la deuxième pièce 2. Plus particulièrement, l'élément mâle 8 est par exemple reçu dans un alésage 20 correspondant de la deuxième pièce 2, le bord de cet alésage 20 étant par exemple introduit dans une gorge annulaire 22 prévue dans un corps 23 de l'élément mâle 8. L'alésage 20 est par exemple pratiqué dans une interface de fixation 24 s'étendant en saillie de la face externe 26 de la deuxième pièce 2, c'est-à-dire la face s'étendant en regard de la première pièce 1. Ainsi, l'interface de fixation 24 n'est pas visible depuis l'habitacle du véhicule, ce qui particulièrement avantageux lorsque la deuxième pièce 2 est un élément de garnissage de l'habitacle du véhicule, dont l'aspect est un critère important. En variante, lorsque la deuxième pièce n'est par exemple pas un élément de garnissage, l'alésage 20 peut traverser la deuxième pièce. Selon une autre variante, l'élément mâle 8 est réalisé d'une seule pièce avec la deuxième pièce 2.

L'élément mâle 8 comprend une tige 28 s'étendant en saillie du corps 23 de l'élément mâle 8 de sorte à s'étendre vers la première pièce 1. Le cas échéant, la tige 28 s'étend en saillie de l'interface de fixation 24 vers la première pièce 1. La tige 28 s'étend selon la direction axiale A et est alignée avec l'axe du logement 14 de l'élément femelle 6 lorsque la deuxième pièce 2 est correctement positionnée par rapport la première pièce 1, comme représenté sur la Fig. 2.

La tige 28 comprend, de son extrémité solidaire de la deuxième pièce 2 à son extrémité libre selon la direction axiale A, un pied 30, un corps 32 et une tête 34, le pied 30 et la tête 34 s'étendant donc de part et d'autre du corps 32.

Le corps 23 est solidaire du pied 30 et forme une base pour l'élément mâle 8

Le corps 32 présente toute forme cylindrique appropriée selon la direction axiale A. A titre d'exemple, le corps 32 présente une forme de cylindre de révolution, à base carrée, rectangulaire ou triangulaire ou autre. Le corps 32 présente une dimension transversale e₂ selon la même direction transversale que celle servant pour la mesure de la dimension transversale e₁ du logement 14. Dans le cas d'un corps 32 de section circulaire, la dimension transversale e₂ correspond au diamètre du corps 32. Selon un mode de réalisation, le corps 32 présente une dimension transversale e₂ décroissante, par exemple de façon linéaire, du pied 30 vers la tête 34. Dans ce cas, le corps 32 présente une dimension transversale e₂ maximale du côté du pied 30. La dimension transversale e₂ du corps 32 est inférieure à la dimension transversale e₁ du logement 14 de sorte que le corps 32 peut pénétrer dans le logement 14 dans interférence avec celui-ci.

La tête 34 forme l'extrémité libre de la tige 28 et présente par exemple une forme sensiblement ovoïde ou cylindrique. Selon un mode de réalisation, l'extrémité libre de la tête 34 est par exemple en forme de pointe ou de pointe arrondie. La tête 34 présente une dimension transversale e₃ maximale, mesurée dans la même direction transversale que la dimension transversale e2 du corps 32, inférieure ou égale à la dimension transversale e₁ du logement 14. Ainsi, la tête 34 peut pénétrer dans le logement 14, par exemple avec une légère friction avec les parois du logement 14. Selon un mode de réalisation, la tête 34 présente une section sensiblement complémentaire de celle du logement 14.

L'élément de retenue 18 est agencé pour réduire localement la dimension transversale du logement 14. Ainsi un passage 36 de dimension transversale e₄ inférieure à la dimension transversale e₁ du logement 14 est formé au droit de l'élément de retenue 18, comme représenté sur la Fig. 2. La dimension transversale e₄ est également inférieure à la dimension transversale e₃ maximale de la tête 34. Selon un mode de réalisation, la dimension transversale e₄ au droit du logement est en outre sensiblement inférieure ou égale à la dimension transversale e₂ maximale du corps 32. L'élément de retenue 18 présente un comportement élastique permettant d'augmenter la dimension transversale e₄ du passage 36 sous l'effet d'une sollicitation entre les bords du passage 36. En d'autres termes, la tête 34 peut passer par le passage 36 en écartant les bords du passage 36 de l'élément de retenue 18 et revenir vers sa position initiale une fois que la tête est passée au-delà du passage 36.

L'élément de retenue 18 comprend par exemple deux branches 38 formant entre elles le passage 36 et liées l'une à l'autre de façon élastique de sorte que les branches 38 peuvent s'écarter l'une de l'autre sous l'effet d'une sollicitation et retourner à leur position initiale en l'absence de cette sollicitation. En d'autres termes, l'élément de retenue présente par exemple la forme d'une fourche ou d'une goupille dont les deux branches peuvent s'écarter de façon élastique et dont l'écartement, au moins au droit du logement 14 et en l'absence de sollicitation, est égal à la dimension transversale e₄ du passage 36.

L'élément de retenue 18 est par exemple monté de façon mobile dans la zone de réception 16 entre une position de retenue, dans laquelle le passage 36 défini par l'élément de retenue 18 s'étend au droit du logement 14, et une position de démontage, dans laquelle un passage de démontage est formé au droit du logement 14. Ce passage de démontage présente une dimension transversale supérieure à la dimension transversale e3 maximale de la tête 34 de sorte que la tige 28 peut être extraite du logement 14 sans interférence avec l'élément de retenue 18. Selon un mode de réalisation, le passage de démontage est formé dans une zone de l'élément de retenue 18 dans laquelle l'écartement entre les branches est augmenté. Selon un autre mode de réalisation, en position de démontage, l'élément de retenue 18 est écarté du logement 14 en étant désengagé de la zone de réception 16 mais reste solidaire de l'élément femelle 6, par exemple par un élément de liaison s'étendant entre l'élément de retenue 18 et l'élément femelle 6. Ainsi, en position de démontage, la tige peut être extraite du logement 14 sans que l'élément de retenue 18 ne forme un obstacle au démontage, mais celui-ci reste lié à l'élément femelle 6 de sorte qu'il ne peut pas se perdre au cours du démontage.

Selon un autre mode de réalisation, l'élément de retenue 18 est extrait hors de la zone de réception 16 dans la position de démontage. En d'autres termes, dans ce mode de réalisation, l'élément de retenue 18 est monté de façon amovible dans la zone de réception 16 de l'élément femelle 6 et est complètement séparé de l'élément femelle 6 au cours du démontage.

Le déplacement ou l'extraction de l'élément de retenue 18 dans ou hors de la zone de réception 16 se fait par exemple manuellement ou à l'aide d'un outil agencé pour coopérer avec la zone de jonction entre les branches 38.

L'élément mâle 8 comprend en outre une surface de butée 40 agencée pour coopérer, dans une configuration de fixation qui sera décrite ultérieurement, avec une surface de butée complémentaire 42 prévue sur l'élément de retenue 18 ou sur l'élément femelle 6.

Selon le mode de réalisation représenté sur les figures, la surface de butée 40 est formée sur le corps 32 de la tige 28 et s'étend selon une direction transversale en saillie du corps 32 de sorte à augmenter localement sa dimension transversale. Ainsi, selon ce mode de réalisation, la surface de butée 40 présente une dimension transversale e₅ supérieure à la dimension transversale e₄ du passage 36. La dimension transversale e₅ de la surface de butée 40 est par exemple sensiblement inférieure ou égale ou inférieure à la dimension transversale e₃ maximale de la tête 34 et est donc inférieure ou égale à la dimension transversale e₁ du logement 14. La surface de butée 40 s'étend par exemple tout autour du corps 32. Dans le cas d'un corps de section circulaire, la surface de butée 40 forme ainsi une bague radiale s'étendant autour du corps 32.

L'élément mâle 8 décrit ci-dessus est par exemple formé d'une seule pièce en matière plastique.

Selon le mode de réalisation représenté sur les figures, la surface de butée complémentaire 42 est formée par l'élément de retenue 18 et plus particulièrement par les bords du passage 36 du côté du logement 14.

En variante, la surface de butée complémentaire 42 est prévue sur l'élément femelle 6, à l'extérieur du logement 14, par exemple sur une partie de l'élément femelle 6 s'étendant de l'autre côté de l'élément de retenue 18 par rapport au logement 14. Dans ce cas, la surface de butée 40 est par exemple prévue sur une partie du corps 32 proche du pied 30 ou sur le pied 30.

Le fonctionnement du dispositif de fixation 4 va à présent être décrit.

L'élément femelle 6 et l'élément mâle 8 sont montés indépendamment l'un de l'autre respectivement sur la première pièce 1 et sur la deuxième pièce 2. Avant ou après le montage de l'élément femelle 6 sur la première pièce 1, l'élément de retenue 18 est monté dans la zone de réception 16 de l'élément femelle et placé dans la position de retenue. On notera qu'en variante, l'élément mâle 8 pourrait être monté sur la première pièce 1 et l'élément femelle et l'élément de retenue 18 pourrait être monté sur la deuxième pièce 2. Le dispositif de fixation 4 est alors dans une configuration désassemblée, dans laquelle l'élément mâle 8 et l'élément femelle 6 ne sont pas fixés l'un à l'autre.

La deuxième pièce 2 est ensuite positionnée par rapport à la première pièce 1 de sorte à placer l'élément mâle 8 en regard de l'élément femelle 6 et plus particulièrement de sorte à aligner l'axe de la tige 28 sur l'axe du logement 14, comme représenté sur la Fig. 2. La première et la deuxième pièces 1 et 2 sont alors rapprochées l'une de l'autre, comme représenté par la flèche F de la Fig. 2, afin de faire pénétrer la tige 28, par la tête 34, dans le logement 14. Avant de pénétrer dans le logement 14, la tête 34 entre en contact avec l'élément de retenue 18 et est engagée dans le passage 36 en écartant les bords du passage 36, grâce au caractère élastique de l'élément de retenue 18. On notera, à cet effet, que la tête 34 peut être conformée pour faciliter cet écartement en présentant une forme de pointe à son extrémité libre, comme décrit précédemment. L'élément de retenue 18 est donc déformé de sorte que la tête 34 peut pénétrer dans le logement 14. Une fois que la tête 34 a passé le passage 36, l'élasticité de l'élément de retenue 18 ramène celui-ci autour du corps 32. Selon la valeur des dimensions transversales e₂ du corps 32 et e₄ du passage 36, l'élément de retenue 18 interfère ou non avec le corps 32 tandis que la tige 28 continue à être enfoncée dans le logement 14.

L'insertion de la tige 28 dans le logement 14 est poursuivie jusqu'à ce que la tête 34 soit écartée selon la direction axiale A de l'élément de retenue 18 d'une distance de débattement d. Lorsque cette distance de débattement d est atteinte, la surface de butée 40 et la surface de butée complémentaire 42 coopèrent l'une avec l'autre de sorte à bloquer les première et deuxième pièces 1 et 2 l'une par rapport à l'autre au moins selon la direction axiale A tendant à extraire la tige 28 hors du logement 14. La distance de débattement d est par exemple sensiblement comprise entre 3 mm et 5 mm, et est par exemple sensiblement égale à 4 mm.

Avant cette coopération, la surface de butée 40 est passée au-delà de la surface de butée complémentaire 42 selon la direction axiale A, par exemple en prévoyant que la surface de butée 40 ou la surface de butée complémentaire 42 puisse se déformer élastiquement pour permettre le passage de la surface de butée 40. Selon le mode de réalisation représenté sur les figures, dans lequel la surface de butée complémentaire 42 est formée sur l'élément de retenue 18, le passage de la surface de butée 40 au-delà de la surface de butée complémentaire 42 se fait par écartement des bords du passage 36 par la surface de butée 40, comme pour le passage de la tête 34. La forme de la surface de butée 40 peut d'ailleurs être agencée pour faciliter cet écartement. Une fois que la surface de butée 40 est passée au-delà du passage 36, celui-ci retourne vers sa forme initiale.

En outre, un appui 44 entre la première pièce 1 et la deuxième pièce 2 peut être prévu pour bloquer les première et deuxième pièces 1 et 2 l'une par rapport à l'autre dans la direction axiale tendant à enfoncer la tige 28 dans le logement 14, comme représenté sur la Fig. 1. En variante, cet appui peut être prévu entre l'élément femelle 6 et l'élément mâle 8.

Le dispositif de fixation 4 se trouve alors dans une configuration de fixation représentée sur la Fig. 1, dans laquelle la surface de butée 40 coopère avec la surface de butée complémentaire 42 et dans laquelle la tête 34 est séparée de l'élément de retenue 18 par la distance de débattement d. Dans cette configuration, la tête 34 et au moins une partie du corps 32 sont engagées dans le logement 14 de sorte que la tête 34 et le pied 30 s'étendent de part et d'autre de l'élément de retenue 18. Selon un mode de réalisation, l'élément de retenue 18 exerce un force de pincement sur le corps 32 selon une direction transversale. La première pièce 1 et la deuxième pièce 2 sont alors fixées l'une à l'autre par le dispositif de fixation 4 et sont immobilisées l'une par rapport à l'autre au moins selon la direction axiale A, notamment grâce à la coopération de la surface de butée 40 et de la surface de butée complémentaire 42, et le cas échéant grâce à l'appui 44. Ainsi, dans la configuration de fixation, la deuxième pièce 2 est immobilisée sur la première pièce 1 selon la direction axiale, sans jeu selon cette direction. Il est entendu que plusieurs dispositifs de fixation 4 peuvent être prévus pour fixer les première et deuxième pièces 1 et 2 en plusieurs endroits de celles-ci.

Dans la configuration de fixation, une première force de retenue selon la direction axiale est appliquée entre la surface de butée 40 et la surface de butée complémentaire 42 tendant à s'opposer à l'extraction de la tige 28 hors du logement 14. La première force de retenue est agencée pour empêcher la tige 28 de s'extraire hors du logement 14 en utilisation normale du véhicule, c'est-à-dire en l'absence d'une sollicitation excessive tendant à écarter la deuxième pièce 2 de la première pièce 1 selon la direction axiale A. Cette première force de retenue est par exemple sensiblement comprise entre 10 daN et 30 daN (décanewton), et de préférence, entre 15 daN et 20 daN..

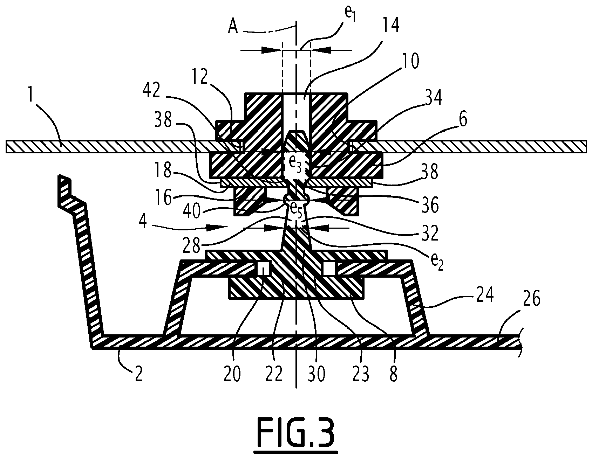

Si une force supérieure à la première force de retenue est appliquée sur l'assemblage de la première pièce 1 et de la deuxième pièce 2 selon la direction axiale A dans le sens d'une extraction de la tige 28 hors du logement 14, par exemple en cas d'un choc contre la face extérieure de la première pièce 1 ou lorsqu'un coussin gonflable de sécurité disposé entre la première pièce 1 et la deuxième pièce 2 se déploie, la coopération de la surface de butée 40 et la surface de butée complémentaire 42 est rompue et la surface de butée 40 passe de l'autre côté de la surface de butée complémentaire 42, c'est-à-dire du côté tourné vers la deuxième pièce 2 de la surface de butée complémentaire 42. Ainsi, la surface de butée 40 est écartée de la surface de butée complémentaire 42 et n'assure plus la fixation des première et deuxième pièces 1 et 2, de sorte que la distance de débattement d n'est plus maintenue par la coopération entre la surface de butée 40 et la surface de butée complémentaire 42. La tête 34 est alors déplacée vers l'élément de retenue jusqu'à ce que la partie de la tête 34 présentant une dimension transversale e3 supérieure à la dimension transversale e4 du passage 36 arrive en butée contre l'élément de retenue 18, comme représenté sur la Fig. 3. La coopération entre la tête 34 et l'élément de retenue 18 est alors agencée pour qu'une deuxième force de retenue, supérieure à la première force de retenue, s'applique entre la tête 34 et l'élément de retenue 18 pour s'opposer à l'extraction de la tête 34 hors du logement 14.

On notera que l'élément de retenue 18 et/ou la tête 34 peuvent être conformés pour que les bords du passage 36 ne s'écartent pas lorsque la tête 34 exerce une force opposée à la deuxième force de retenue sur l'élément de retenue 18. La deuxième force de retenue est donc agencée pour empêcher l'extraction de la tête 34 hors du logement 14 et maintenir une fixation entre la première pièce 1 et la deuxième pièce 2 en cas d'impact et/ou en cas de déploiement d'un coussin gonflable. La deuxième force de retenue correspond donc à une force de résistance à l'arrachement entre la deuxième pièce 2 et la première pièce 1. La deuxième force de retenue est par exemple sensiblement supérieure ou égale à 80 daN. Selon un mode de réalisation, la deuxième force de retenue est sensiblement comprise entre 80 daN et 150 daN, et de préférence, entre 100 daN et 130 daN. Lorsque la fixation des première et deuxième pièces 1 et 2 est assurée par la coopération de la tête 34 et de l'élément de retenue 18 car la surface de butée 40 ne coopère pas avec la surface de butée complémentaire 42, le dispositif de fixation 4 est dans une configuration de résistance à l'arrachement, représentée sur la Fig. 3 et empêchant la deuxième pièce 2 de se séparer de la première pièce 1 et ainsi d'être projetée dans l'habitacle du véhicule.

Selon le mode de réalisation dans lequel la surface de butée complémentaire 42 est formée par l'élément de retenue 18, on notera que la tête 34 vient également en contact avec cette surface de butée complémentaire 42 dans la configuration de résistance à l'arrachement.

On notera qu'après le choc, si la première et/ou la deuxième pièces 1 et 2 ainsi que le dispositif de fixation 4 n'ont pas été endommagés, le dispositif de fixation 4 peut à nouveau être placé dans la configuration de fixation en rapprochant la deuxième pièce 2 de la première pièce 1.

Comme indiqué précédemment, le dispositif de fixation 4 peut être désassemblé en séparant l'élément mâle 8 de l'élément femelle 6. Pour ce faire, à partir de la configuration de fixation, la coopération entre la surface de butée 40 et la surface de butée complémentaire 42 est défaite par exemple en tirant manuellement sur la deuxième pièce 2 pour la séparer de la première pièce 1 en exerçant une force supérieure à la première force de retenue sur la deuxième pièce 2, ce qui ne nécessite pas un effort trop important de la part d'un opérateur. Le dispositif de fixation 4 passe alors dans la configuration de résistance à l'arrachement, dans laquelle un jeu correspondant à la distance de débattement d existe entre la première pièce 1 et la deuxième pièce 2. La deuxième pièce 2 peut donc être écartée de la première pièce 1 d'une distance égale à la distance de débattement, ce qui permet à un opérateur de passer un doigt ou un outil entre les première et deuxième pièces 1 et 2 et d'actionner l'élément de retenue 18 pour le déplacer de sa position de retenue à sa position de démontage. En continuant de tirer sur la deuxième pièce 2, la tête 34 peut alors être extraite du logement 14 sans interférence avec l'élément de retenue 18 et donc sans avoir à surmonter la deuxième force de retenue. La deuxième pièce 2 est alors désolidarisée de la première pièce 1.

Le dispositif de fixation décrit ci-dessus remplit donc à la fois une fonction de résistance à l'arrachement et une fonction de fixation sans jeu des première et deuxième pièces 1 et 2 entre elles. Ainsi, il n'est pas nécessaire de prévoir deux dispositifs de fixation distincts pour remplir ces fonctions, ce qui simplifie la structure des pièces, en réduisant le nombre de dispositifs de fixation nécessaires, et le procédé de montage d'une pièce sur l'autre et de désassemblage des pièces entre elles.

## Revendications

1. Dispositif de fixation (4) d'une première pièce (1) et d'une deuxième pièce (2), ledit dispositif de fixation comprenant :
- un élément femelle (6) destiné à être fixé à la première pièce (1) et comprenant un logement (14) s'étendant selon une direction axiale (A),
- un élément mâle (8) destiné à être fixé à la deuxième pièce (2) et comprenant une tige (28) comprenant un corps (32), un pied (30) et une tête (34), le pied (30) et la tête (34) s'étendant de part et d'autre dudit corps (32), la tête (34) présentant une dimension transversale (e3), selon une direction transversale sensiblement perpendiculaire à la direction axiale (A),
- un élément de retenue (18) s'étendant en travers d'une partie du logement (14) de l'élément femelle (6) et définissant dans celui-ci un passage (36) dont la dimension transversale (e4) est inférieure à la dimension transversale (e3) maximale de la tête (34),
l'élément femelle (6) et l'élément mâle (8) étant fixés l'un à l'autre au moins dans une configuration de fixation, dans laquelle au moins une partie du corps (32) de la tige (28) de l'élément mâle (8) est introduite dans ledit logement (14) selon la direction axiale (A) de sorte que le pied (30) et la tête (34) de la tige (28) s'étendent de part et d'autre de l'élément de retenue (18), une distance de débattement (d) séparant la tête (34) de l'élément de retenue (18),
l'élément mâle (8) comprenant en outre une surface de butée (40) s'étendant transversalement sur l'élément mâle (8), l'élément femelle (6) comprenant une surface de butée complémentaire (42), ladite surface de butée (40) coopérant avec ladite surface de butée complémentaire (42) dans la configuration de fixation, la distance de débattement (d) entre la tête (34) de la tige (28) et l'élément de retenue (18) étant maintenue par ladite coopération,
l'élément de retenue (18) étant mobile par rapport à l'élément femelle (6) entre une position de retenue, dans laquelle l'élément de retenue (18) forme dans le logement (14) le passage (36) dont la dimension transversale (e4) est inférieure à la dimension transversale (e3) maximale de la tête (34), et une position de démontage,
la surface de butée complémentaire (42) étant prévue sur l'élément femelle (6) à l'extérieur du logement (14), **caractérisé en ce que**, dans la position de démontage, l'élément de retenue (18) forme dans le logement (14) un passage de démontage dont la dimension transversale est supérieure à la dimension transversale (e3) maximale de la tête (34) ou dans laquelle l'élément de retenue est écarté du logement et reste solidaire de l'élément femelle (6) par un élément de liaison s'étendant entre l'élément de retenue (18) et l'élément femelle (6).

2. Dispositif de fixation selon la revendication 1, dans lequel la surface de butée complémentaire (42) est prévue sur une partie de l'élément femelle (6) s'étendant de l'autre côté de l'élément de retenue (18) par rapport au logement (14).

3. Dispositif de fixation selon la revendication 1 ou 2, dans lequel la surface de butée (40) est prévue sur une partie du corps (32) proche du pied (30) ou sur le pied (30).

4. Dispositif de fixation selon l'une quelconque des revendications 1 à 3, dans lequel l'élément femelle (6) et l'élément mâle (8) sont en outre fixé l'un à l'autre dans une configuration de résistance à l'arrachement, dans laquelle la surface de butée (40) est séparée de la surface de butée complémentaire (42) et dans laquelle la fixation de l'élément mâle (8) et de l'élément femelle (6) est maintenue par une coopération entre la tête (34) de la tige (28) et l'élément de retenue (18).

5. Dispositif de fixation selon la revendication 4, dans lequel une première force de retenue selon la direction axiale (A) est appliquée entre la surface de butée (40) et de la surface de butée complémentaire (42) dans la configuration de fixation et une deuxième force de retenue selon la direction axiale (A) est appliquée entre la tête (34) et l'élément de retenue (18) dans la configuration de résistance à l'arrachement, la première force de retenue étant inférieure à la deuxième force de retenue.

6. Dispositif de fixation selon la revendication 5, dans lequel la première force de retenue est sensiblement comprise entre 10 daN et 30 daN.

7. Dispositif de fixation selon la revendication 5 ou 6, dans lequel la deuxième force de retenue est sensiblement supérieure ou égale à 80 daN.

8. Dispositif de fixation selon l'une quelconque des revendications 1 à 7, dans lequel l'élément de retenue (18) comprend deux branches (38) sensiblement élastiques, définissant entre elles le passage (36), une partie du corps (32) de la tige (28) de l'élément mâle (8) s'étendant dans le passage (36) au moins dans la configuration de fixation.

9. Dispositif de fixation selon l'une quelconque des revendications 1 à 8, dans lequel l'élément de retenue (18) est fixé de façon amovible à l'élément femelle (6)..

10. Dispositif de fixation selon l'une quelconque des revendications 1 à 9, dans lequel la surface de butée (40) s'étend selon une direction transversale à partir d'une partie du corps (32) de la tige (28).

11. Ensemble d'une première pièce (1) et d'une deuxième pièce (2), ladite deuxième pièce (2) étant fixée à ladite première pièce (1) par au moins un dispositif de fixation (4) selon l'une quelconque des revendications 1 à 10, l'élément femelle (6) dudit dispositif de fixation (4) étant fixé à ladite première pièce (1) et l'élément mâle (8) dudit dispositif de fixation (4) étant fixé à ladite deuxième pièce (2), ledit dispositif de fixation (4) étant dans la configuration de fixation.

12. Ensemble selon la revendication 11, dans lequel la première pièce (1) est une tôle de porte de véhicule et la deuxième pièce (2) est un panneau de porte.

## Patentansprüche

1. Befestigungsvorrichtung (4) für einen ersten Teil (1) und einen zweiten Teil (2), die Befestigungsvorrichtung umfassend:
- ein Buchsenelement (6), das bestimmt ist, um an dem ersten Teil (1) befestigt zu werden, und umfassend ein Gehäuse (14), das sich in einer axialen Richtung (A) erstreckt,
- ein Steckelement (8), das bestimmt ist, um an dem zweiten Teil (2) befestigt zu werden, und umfassend eine Stange (28), umfassend einen Körper (32), einen Fuß (30) und einen Kopf (34), wobei sich der Fuß (30) und der Kopf (34) auf beiden Seiten des Körpers (32) erstrecken, wobei der Kopf (34) eine Querabmessung (e3) in einer Querrichtung im Wesentlichen senkrecht zu der axialen Richtung (A) aufweist,
- ein Halteelement (18), das sich über einen Teil des Gehäuses (14) des Buchsenelements (6) erstreckt und darin einen Durchgang (36) definiert, dessen Querabmessung (e4) geringer als die maximale Querabmessung (e3) des Kopfes (34) ist,
wobei das Buchsenelement (6) und das Steckelement (8) mindestens in einer Befestigungskonfiguration aneinander befestigt sind, wobei mindestens ein Teil des Körpers (32) der Stange (28) des Steckelements (8) in das Gehäuse (14) in der axialen Richtung (a) eingeführt ist, sodass sich der Fuß (30) und der Kopf (34) der Stange (28) auf beiden Seiten des Halteelements (18) erstrecken, wobei ein Spielabstand (d) den Kopf (34) von dem Halteelement (18) trennt,
das Steckelement (8) ferner umfassend eine Anlageoberfläche (40), die sich quer über das Steckelement (8) erstreckt, das Buchsenelement (6) umfassend eine komplementäre Anlageoberfläche (42), wobei die Anlageoberfläche (40) mit der komplementären Anlageoberfläche (42) in der Befestigungskonfiguration zusammenwirkt, wobei der Spielabstand (d) zwischen dem Kopf (34) der Stange (28) und dem Halteelement (18) durch das Zusammenwirken gehalten wird,
wobei das Halteelement (18) relativ zu dem Buchsenelement (6) zwischen einer Halteposition, wobei das Halteelement (18) in dem Gehäuse (14) den Durchgang (36) ausbildet, dessen Querabmessung (e4) geringer als die maximale Querabmessung (e3) des Kopfes (34) ist, und einer Demontageposition bewegbar ist,
wobei die komplementäre Anlageoberfläche (42) an dem Buchsenelement (6) außerhalb des Gehäuses (14) bereitgestellt ist,
**dadurch gekennzeichnet, dass** in der Demontageposition das Halteelement (18) in dem Gehäuse (14) einen Entfernungsdurchgang ausbildet, dessen Querabmessung größer als die maximale Querabmessung (e3) des Kopfes (34) ist, oder wobei das Halteelement von dem Gehäuse getrennt ist und mit dem Buchsenelement (6) einstückig bleibt durch ein Verbindungselement, das sich zwischen dem Halteelement (18) und dem Buchsenelement (6) erstreckt.

2. Befestigungsvorrichtung nach Anspruch 1, wobei die komplementäre Anlageoberfläche (42) an einem Teil des Buchsenelements (6) bereitgestellt ist, der sich von der anderen Seite des Halteelements (18) relativ zu dem Gehäuse (14) erstreckt.

3. Befestigungsvorrichtung nach Anspruch 1 oder 2, wobei die Anlageoberfläche (40) an einem Teil des Körpers (32) nahe dem Fuß (30) oder auf dem Fuß (30) bereitgestellt ist.

4. Befestigungsvorrichtung nach einem der Ansprüche 1 bis 3, wobei das Buchsenelement (6) und das Steckelement (8) ferner in einer Abziehwiderstandskonfiguration aneinander befestigt sind, wobei die Anlageoberfläche (40) von der komplementären Anlageoberfläche (42) getrennt ist und wobei die Befestigung des Steckelements (8) und des Buchsenelements (6) durch ein Zusammenwirken zwischen dem Kopf (34) der Stange (28) und dem Halteelement (18) gehalten wird.

5. Befestigungsvorrichtung nach Anspruch 4, wobei eine erste Haltekraft in der axialen Richtung (A) zwischen der Anlageoberfläche (40) und der komplementären Anlageoberfläche (42) in der Befestigungskonfiguration angewandt wird und eine zweite Haltekraft in der axialen Richtung (A) zwischen dem Kopf (34) und dem Halteelement (18) in der Abziehwiderstandskonfiguration angewandt wird, wobei die erste Haltekraft geringer als die zweite Haltekraft ist.

6. Befestigungsvorrichtung nach Anspruch 5, wobei die erste Haltekraft im Wesentlichen zwischen 10 daN und 30 daN liegt.

7. Befestigungsvorrichtung nach Anspruch 5 oder 6, wobei die zweite Haltekraft im Wesentlichen größer als oder gleich 80 daN ist.

8. Befestigungsvorrichtung nach einem der Ansprüche 1 bis 7, wobei das Halteelement (18) zwei im Wesentlichen elastische Zweige (38) umfasst, die zwischen ihnen den Durchgang (36) definieren, wobei sich ein Teil des Körpers (32) der Stange (28) des Steckelements (8) mindestens in der Befestigungskonfiguration in den Durchgang (36) erstreckt.

9. Befestigungsvorrichtung nach einem der Ansprüche 1 bis 8, wobei das Halteelement (18) an dem Buchsenelement (6) entfernbar befestigt ist.

10. Befestigungsvorrichtung nach einem der Ansprüche 1 bis 9, wobei sich die Anlageoberfläche (40) in einer Querrichtung von einem Teil des Körpers (32) der Stange (28) erstreckt.

11. Anordnung eines ersten Teils (1) und eines zweiten Teils (2), wobei der zweite Teil (2) an dem ersten Teil (1) durch mindestens eine Befestigungsvorrichtung (4) nach einem der Ansprüche 1 bis 10 befestigt ist, wobei das Buchsenelement (6) der Befestigungsvorrichtung (4) an dem ersten Teil (1) befestigt ist und das Steckelement (8) der Befestigungsvorrichtung (4) an dem zweiten Teil (2) befestigt ist, wobei sich die Befestigungsvorrichtung (4) in der Befestigungskonfiguration befindet.

12. Anordnung nach Anspruch 11, wobei der erste Teil (1) eine Fahrzeugblechtür ist und der zweite Teil (2) eine Türverkleidung ist.

## Claims

1. An attachment device (4) for a first part (1) and a second part (2), said attachment device comprising:
- a female element (6) intended to be attached to the first part (1) and comprising a housing (14) extending in an axial direction (A),
- a male element (8) intended to be attached to the second part (2) and comprising a rod (28) comprising a body (32), a foot (30) and a head (34), the foot (30) and the head (34) extending on either side of said body (32), the head (34) having a transverse dimension (e3) in a transverse direction substantially perpendicular to the axial direction (A),
- a retaining element (18) extending across a part of the housing (14) of the female element (6) and defining therein a passage (36) whose transverse dimension (e4) is less than the maximum transverse dimension (e3) of the head (34),
the female element (6) and the male element (8) being attached to one another at least in an attachment configuration, wherein at least part of the body (32) of the rod (28) of the male element (8) is inserted into said housing (14) in the axial direction (A) so that the foot (30) and the head (34) of the rod (28) extend on either side of the retaining element (18), a clearance distance (d) separating the head (34) from the retaining element (18),
the male element (8) further comprising an abutment surface (40) extending transversely over the male element (8), the female element (6) comprising a complementary abutment surface (42), said abutment surface (40) cooperating with said complementary abutment surface (42) in the attachment configuration, the clearance distance (d) between the head (34) of the rod (28) and the retaining element (18) being held by said cooperation,
the retaining element (18) being movable relative to the female element (6) between a retaining position, wherein the retaining element (18) forms in the housing (14) the passage (36) whose transverse dimension (e4) is less than the maximum transverse dimension (e3) of the head (34), and a disassembly position,
the complementary abutment surface (42) being provided on the female element (6) outside the housing (14), **characterized in that,** in the disassembly position, the retaining element (18) forms in the housing (14) a removal passage whose transverse dimension is greater than the maximum transverse dimension (e3) of the head (34) or wherein the retaining element is separated from the housing and remains integral with the female element (6) by a connecting element extending between the retaining element (18) and the female element (6).

2. The attachment device according to claim 1, wherein the complementary abutment surface (42) is provided on a part of the female element (6) extending from the other side of the retaining element (18) relative to the housing (14).

3. The attachment device according to claim 1 or 2, wherein the abutment surface (40) is provided on a part of the body (32) close to the foot (30) or on the foot (30).

4. The attachment device according to any one of claims 1 to 3, wherein the female element (6) and the male element (8) are further attached to one another in a pull-off resistance configuration, wherein the abutment surface (40) is separated from the complementary abutment surface (42) and wherein the attachment of the male element (8) and the female element (6) is held by a cooperation between the head (34) of the rod (28) and the retaining element (18).

5. The attachment device according to claim 4, wherein a first retaining force in the axial direction (A) is applied between the abutment surface (40) and the complementary abutment surface (42) in the attachment configuration and a second retaining force in the axial direction (A) is applied between the head (34) and the retaining element (18) in the pull-off resistance configuration, the first retaining force being less than the second retaining force.

6. The attachment device according to claim 5, wherein the first retaining force is substantially between 10 daN and 30 daN.

7. The attachment device according to claim 5 or 6, wherein the second retaining force is substantially greater than or equal to 80 daN.

8. The attachment device according to any one of claims 1 to 7, wherein the retaining element (18) comprises two substantially elastic branches (38), defining between them the passage (36), a part of the body (32) of the rod (28) of the male element (8) extending into the passage (36) at least in the attachment configuration.

9. The attachment device according to any one of claims 1 to 8, wherein the retaining element (18) is removably attached to the female element (6).

10. The attachment device according to any one of claims 1 to 9, wherein the abutment surface (40) extends in a transverse direction from a part of the body (32) of the rod (28).

11. Assembly of a first part (1) and a second part (2), said second part (2) being attached to said first part (1) by at least one attachment device (4) according to any one of claims 1 to 10, the female element (6) of said attachment device (4) being attached to said first part (1) and the male element (8) of said attachment device (4) being attached to said second part (2), said attachment device (4) being in the attachment configuration.

12. The assembly according to claim 11, wherein the first part (1) is a vehicle sheet-metal door, and the second part (2) is a door panel.
